# EUROPEAN PATENT SPECIFICATION

(11) **EP 1 527 571 B1**
(45) Date of publication and mention of the grant of the patent: **26.09.2012**
(21) Application number: 03757084.3
(22) Date of filing: 10.06.2003
(51) Int. Cl.: H04L 12/56, H04L 29/08, H04L 29/06

(54) **METHOD AND APPARATUS FOR IMPLEMENTING QOS IN DATA TRANSMISSIONS**
VERFAHREN UND EINRICHTUNG ZUR QOS IMPLEMENTIERUNG IN DATENÜBERTRAGUNGEN
PROCEDE ET DISPOSITIF DE MISE EN OEUVRE D'UNE QUALITE DE SERVICE DANS DES TRANSMISSIONS DE DONNEES

(30) Priority: 10.06.2002 FI 20021113
(43) Date of publication of application: 04.05.2005
(73) Proprietor: Mavenir Systems Oy, 02240 Espoo (FI)
(72) Inventor: KALLIOLA, Janne, FIN-02750 Espoo (FI); KHASHCHANSKIY, Victor, FIN-00500 Helsinki (FI)
(74) Representative: Savela, Antti-Jussi Tapani
(86) International application number: PCT/FI2003/000455
(87) International publication number: WO 2003/105416

(56) References cited:
- EP-A2- 1 006 689
- WO-A1-00/10297
- WO-A1-00/69125
- GB-A- 2 372 172
- US-A- 5 231 633
- US-A- 5 553 061

## Description

### Field of the invention

The present invention relates to communication protocols, such as the wireless application protocol (WAP), and means for adjusting quality of service (QoS) levels so that users and/or service providers can control how transmission capacity is allocated to their transmissions.

### Background of the invention

The open systems interconnection (OSI) architecture has been developed by the International Organization for Standardization (ISO) to describe the operation and design of layered protocol architectures. The communication between the nodes in a packet data network must be somehow defined so that the receiving node can correctly handle packets. The packets exchanged between nodes are defined by a communication protocol or, in short, a protocol. Each protocol needs to perform several functions, such as addressing of the communication nodes, identification of interfaces, reliability functions, error reporting, synchronization, etc. In practice, there are so many necessary functions that a set of protocols is needed for communications. Each protocol in the set takes care of one specific aspect of the communication. The protocols are usually structured to form a layered architecture that is known as a protocol stack.

The precise functions of each layer vary. However, there is a distinction between the functions of the upper and lower network layers. The lower layers are intended to provide a connection, or path, between nodes and hide details of underlying communications facilities. The upper layers are intended to ensure that the data exchanged between nodes is in correct form. The upper layers can also be termed applications-oriented layers because they deal with applications. According to the known server-client - model, applications operate as servers and/or clients. The transport layer provides the connection between the upper, i.e. application-oriented layers, and the lower layers.

The wireless application protocol (WAP) is defined by an industry association that is called the WAP Forum. The WAP architecture provides a scaleable and extensible environment for application development for mobile communication devices. A WAP stack is software that handles data units/datagrams/packets in accordance with the WAP.

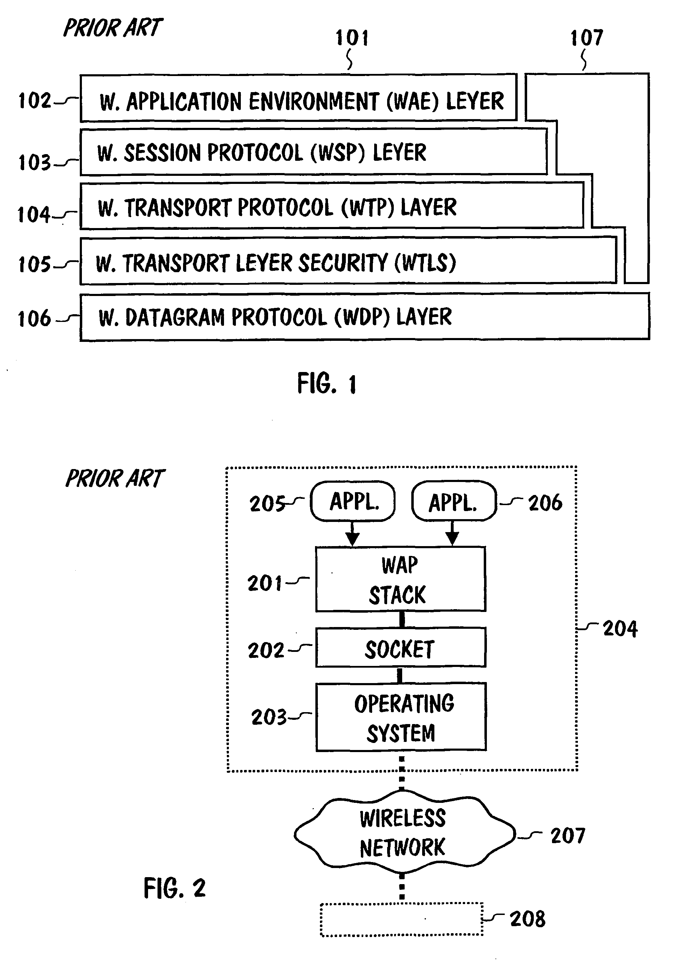

FIG. 1 shows the prior art WAP stack 101 that comprises five layers performing predetermined tasks. The layers of the WAP stack are: the wireless application environment (WAE) layer 102, wireless session protocol (WSP) layer 103, wireless transport protocol (WTP) layer 104, wireless transport layer security (WTLS) 105, and the wireless datagram protocol (WDP) layer 106. The WDP layer provides the convergence between a bearer service and the rest of the WAP stack. There are a lot of usable bearer services, such as GSM or CDMA. Each of the layers shown in FIG. 1 is accessible by the adjacent layer or layers, as well as by other services and applications 107.

The WTP layer of the prior art WAP stack provides reliable transport for datagrams. WTP is similar to transmission control protocol (TCP) but compared to TCP, WTP saves the processing power and memory of clients. The additional advantages of WTP are that more clients can use WAP services because of the reduced bandwidth usage of a transmission network. For example: the need for 3-way handshakes between the client and server is reduced, and in addition, all packets belonging to a transmission can be used for carrying data.

The communication parties using WAP need WAP stacks to be able to communicate with each other. For example, one communication party may be a WAP server and another communication party may be a WAP phone.

FIG. 2 shows the prior art WAP stack 201, a socket 202, and an operating system 203 which are placed in a communication device 204. In this example the WAP stack 201 is stand-alone software, but it could also be a part of the operating system. The operating system 203 runs two applications 205 and 206, of which application 205 is a real audio player and application 206 is a browser. The WAP stack receives data from the said applications and transmits the data via a wireless network 207 to another communication party 208.

The exact meaning of the term "quality of service" (QoS), varies in the prior art. Generally speaking, QoS relates to priorities of applications. GB2346303 describes a method for transmitting data with a certain error protection level. A user and/or service provider may specify on which error protection level their data, e.g. text, audio, or video, is transmitted. However, the purpose and implementation of QoS in GB2346303 is different than in the invention.

Patent US-5553061 describes a system and method for optimizing the handling of packet data in a communications packet switch. The cost and performance of the packet switch is tailored to suit diverse needs of multiple users who can specify the type of treatment that is most beneficial to their needs. A user who has real-time video transmission requirements may specify a high service priority while a user with strict data loss requirements may specify a high loss priority. When a user has a high service priority, the packet switch delivers out that user's data sooner than data of a user who specified a lower service priority. When a user has a low loss priority and the network becomes congested, the packet switch discards that user's data before the data of a user with a higher loss priority.

Patent US-5231633 teaches a method of post-switching fast packets for differing traffic types. The method is used at a network trunk node of an integrated fast packet network that supports transmission of varying traffic types. First traffic type fast packets from a plurality of first sources are received and then prioritized for transmission pursuant to a first prioritization method. Second traffic type fast packets are received from a plurality of second sources and then prioritized for transmission pursuant to a second prioritization method. Finally, the first and second traffic type fast packets are multiplexed pursuant to a weighted round robin bandwidth allocation protocol, and the multiplexed packets are transmitted.

A drawback of the methods described above is that packets from various applications running in a user terminal have same priority, i.e. the applications have same QoS (quality of service), and thus priorities of applications are not taken into account when sending data from the user terminal.

The main drawback of the prior art is that users, as well as service providers, are lacking adequate means for adjusting QoS. For example, a user should be able to choose which service/application obtains the most resources when he/she uses a number of services simultaneously and a network is congested.

### Summary of the invention

The main objective of the invention is to implement quality of service (QoS) levels in transmissions, especially in WAP transmissions. A QoS level intended for a user determines how the network resources available for the said user are divided among the services that he/she currently uses. A QoS level intended for a service provider may determine, for example, how the network resources available for the server equipment of the service provider is divided among the users of the server equipment. A basic principle is that if a user has paid an extra charge to have the highest QoS level, he/she should get more data per a time unit compared to those who don't have the highest QoS level.

A user can specify QoS levels for the applications of his/her terminal equipment. A service provider can specify QoS levels for the applications and/or users of the server equipment of the service provider. QoS levels are taken into account when sending the data from terminal equipment to server equipment, or vice versa. Thus, the QoS levels prioritize data transmissions.

The invention comprises a method and apparatus for implementing QoS levels in data transmissions in communication networks. The apparatus is a terminal, e.g. a WAP phone, or server apparatus comprising a HTTP server and a WAP gateway, for example.

The method is based on certain modifications in a communication protocol stack. The modified stack uses a queue for prioritizing transmissions. At least the handling of the queue is located in the modified stack. The queue may or may not be located in the modified stack. The modified stack may determine the QoS level of a packet by itself, or a separated software performs the determination and transmits the QoS level of the packet to the modified stack by one way or another.

The method comprises the following steps:
a packet sent by an application is received in a node of the communication network on one layer of a communication protocol stack implementing a certain communication protocol set used in the communication network,
a quality of service level of the packet is determined, in the communication protocol stack, as a function of information transmitted with said packet, the function being composed of a rule/rules which are configurable from outside of the communication protocol stack in accordance with the determined quality of service level,
one of the following quality of service operations is performed in the communication protocol stack: transmitting the packet to another application via the communication network, removing of the packet, or placing the packet with the quality of service level in a queue, wherein at least handling of the queue is placed in the communication protocol stack.

When applying the method to WAP transmissions, QoS can be implemented in one layer of a WAP stack, for example, in the WTP layer, or the QoS feature can be implemented in two or more layers of the WAP stack. If the QoS feature is located in two or more layers, those layers may use an additional header in the packets to be handled. The additional header may transmit, for example, the QoS level of a packet from one layer to another. The modified WAP stack can handle normal packets and packets with an additional header. Thus the operation of the modified WAP stack is transparent for applications.

The apparatus, which is used for transmissions, has some fixed maximum transmission capacity in bytes. However, usable transmission capacity varies in time, especially, if sending and receiving data consume the same transmission capacity. Therefore the apparatus is adapted to calculate the usable transmission capacity by taking into account the number of bytes currently used for receiving data and the maximum transmission capacity.

If the usable transmission capacity is low and the QoS level of a packet is low, the packet may be removed from the queue. If the transmission network is congested, a packet may be replaced in the queue in accordance with its QoS level.

The above-mentioned operations and other packet handling operations are based on certain rule/rules. One of those rules may determine, for example, in which position the packet is placed in the queue. Another rule may determine, for example, whether a packet can be aborted or not. Rules are organized in rule sets, which are configurable through a user interface and/or a special network node.

### Brief description of the drawings

The invention is described more closely with reference to the accompanying drawings, in which
- Figure 1: shows the layers of the prior art WAP stack,
- Figure 2: shows the prior art WAP stack, a socket, and an operating system,
- Figure 3: shows a first example of the modified WAP stack,
- Figure 4: shows a second example of the modified WAP stack,
- Figure 5: shows a third example of the modified WAP stack,
- Figure 6: shows an example of the QoS level attributes,
- Figure 7: shows queue handling in the modified WAP stack,
- Figure 8: shows a rule composed of one condition and three operations,
- Figure 9: shows an example of a server apparatus,
- Figure 10: shows an example of a terminal apparatus,
- Figure 11: shows communicating WAP devices,
- Figure 12: shows an apparatus composed of a proxy server and a WAP gateway.

### Detailed description of the invention

The use of the method requires at least one modified communication protocol stack, or the corresponding functionality in an operating system.

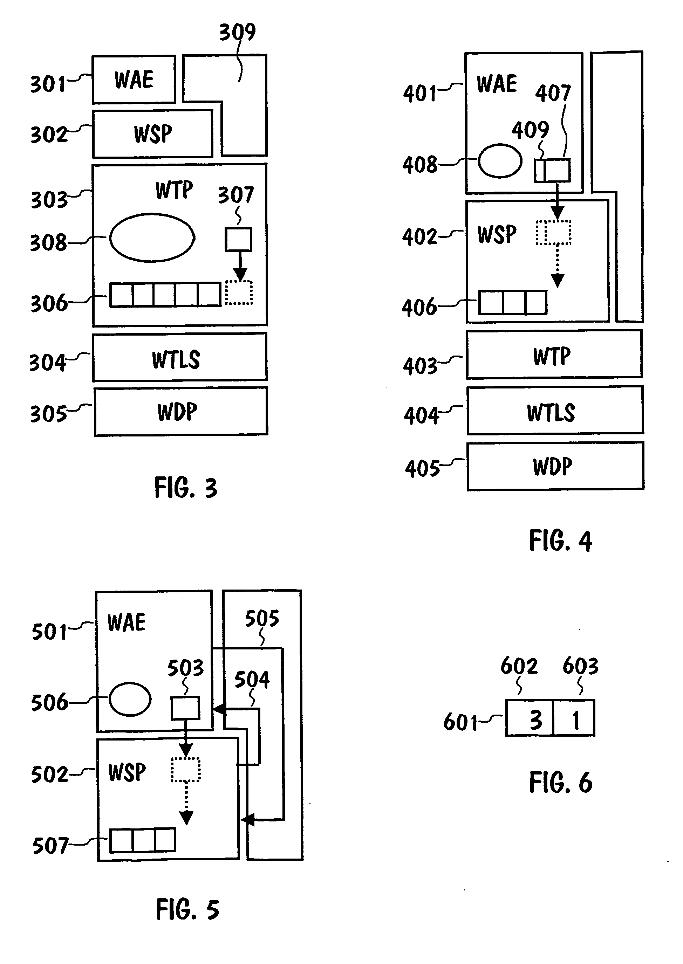

FIG. 3 shows a first example of the modified WAP stack consisting of the WAE layer 301, WSP layer 302, WTP layer 303, WTLS 304, and the WDP layer 305. The layers of the modified stack perform the same functions as in the prior art WAP stack layers, except the WTP layer 303 that differs from the WTP layer of the prior art WAP stack. The WTP layer 303 of the modified WAP stack contains a queue 306 to handle packets. The packets can be transmitted in a different order than they are received. A new packet 307 received through the WAE and WSP layers belongs to a transmission having a higher QoS level than any packets in the queue 306. The WTP layer includes rules 308 concerning the packet handling and according to those rules the packet 307 is placed in the head of the queue and transmitted before the other packets. If needed, the rules 308 can be altered through an application 309 having a special interface to the WTP layer.

Encapsulation means that a communication protocol adds a protocol control information (PCI) header to a packet that is termed a service data unit (SDU). The encapsulation results in a protocol data unit (PDU). The WTP layer encapsulates PDUs, i.e. adds a certain header to a PDU resulting in a datagram.

An additional encapsulation is not necessary in the modified WAP stack shown in FIG. 3. In other words, a packet received through the WAE and WSP layers does not need to include additional information to determine the QoS level of the packet. The information that is transmitted in the prior art encapsulation may be sufficient to determine the QoS level. If it is not sufficient, the additional information that determines the QoS level of the packet can be transmitted to the WTP layer, for example, through application 309.

The prior art WTP layer performs the following functions: an abort function for unsuccessful requests, a concatenation of PDUs, a fragmentation of a PDU, a retransmission of lost datagrams, selective retransmission, port number addressing, flow control, etc. Because the WTP layer deals with the abort function and retransmission of datagrams, it is reasonable to implement the QoS feature in the WTP layer. For example, the abort function of the WTP layer can be used for datagrams having very low QoS level. The QoS feature can also be implemented in some other layer of the WAP stack than the WTP layer, or the QoS feature can be implemented in two or more layers of the WAP stack. If the QoS feature is implemented in two or more layers, those layers need to cooperate in some way.

FIG. 4 shows a second example of the modified WAP stack, consisting of the WAE layer 401, WSP layer 402, WTP layer 403, WTLS 404, and the WDP layer 405. The layers of this modified WAP stack perform the same functions as in the prior art layers, except the WAE layer 401 and WSP layer 402 that differ from the prior art layers. The WAE layer 401 of the modified WAP stack includes rules 408 concerning packet handling and the WSP layer 402 contains a queue 406 to handle packets received. A new packet 407 is received on the WAE layer. In this example, the cooperation of the WAE and WSP layers is based on an additional encapsulation. The WAE layer 401 locates the QoS level determined by the rules 408 in the additional header 409 of the packet 407 and transmits the packet to the WSP layer 402. The WSP 402 layer obtains the QoS level from the packet's additional header 409, and places the packet in the queue 406 in accordance with its QoS level.

In FIG. 4 the interface between the WAE and WSP layers differs from the standard interface, because the packets to be transmitted include the additional header. Let us suppose that instead of the WSP layer, the WDP layer handles the queue 406. Then the interface between the WSP and WTP layers, the interface between the WTP layer and the WTLS, and the interface between the WTLS and WDP layer should be altered too, to transmit the additional header to the WDP layer. For simplicity, it is reasonable to implement the QoS feature in upper layers of a WAP stack to avoid altering the standard interfaces of the WAP stack. On the other hand, the closer to the network QoS is located, the more efficiently QoS works.

However, if required, the additional encapsulation can be totally avoided and the cooperation of the WAP layers can be arranged in another way.

FIG. 5 shows a third example of the modified WAP stack containing the WAE layer 501 and WSP layer 502. The WTP layer, WTLS, and the WDP layer are omitted from FIG. 5. When the WAE layer 501 receives a packet 503 sent by an application, it transmits the packet to the WSP layer 502 without any additional encapsulation. The WSP layer receives the packet 503 and sends a QoS level request 504 to the WAE layer. The QoS level request includes information that identifies the packet 503. The WAE layer finds out the QoS level 505 of the packet 503 by using the said information and rules 506 and returns the QoS level 505 as a response to the QoS level request 504. Then the WAE layer places the packet 503 in the queue 507 in accordance with the QoS level 505.

A QoS level can be transmitted from a WAP layer to another by placing the QoS level in an additional header, or the QoS level can be transmitted from a WAP layer to another as show in FIG. 5.

The modified WAP stacks shown in FIG. 3, 4, and 5 are just a few examples of how to implement the inventive method in WAP stacks. The modified WAP stack can handle normal packets and packets with a QoS level, i.e. packets with additional encapsulation. The modified WAP stack can separate these two types of packets from each other and map some predetermined QoS level to normal packets. Therefore all received packets are placed in the queue taking into account their QoS levels. The modified WAP stack is transparent for applications, i.e. an application can use the modified WAP in the same way than the prior art WAP stack.

The queue used in the modified WAP stack should be understood as a logical queue. The said queue may or may not be implemented as a data structure that is termed a queue.

As well as the prior art WAP stack the modified WAP stack is adapted to receive a packet containing a retransmission request or a packet acknowledgement. The retransmission request or missing of the packet acknowledgement indicates that a certain transmission may be interrupted. Then the missing packet should be retransmitted as soon as possible to avoid the interruption of the said transmission. A great number of retransmission requests indicate that the communication network is congested.

The QoS level of a packet may be composed of two or more QoS level attributes.

FIG. 6 shows an example of QoS level attributes. The QoS level 601 is composed of two attributes 602 and 603. Attribute 602 contains priority 3 and attribute 603 contains priority 1, wherein the priority range is from 1 to 5 so that priority 1 is the highest priority and priority 5 is the lowest priority.

When the QoS level is composed of several attributes, there must be some specification specifying which attribute should be obeyed. For example, the modified WAP stack may use the following specification: if a network is congested attribute 603 is obeyed, otherwise attribute 602 is obeyed.

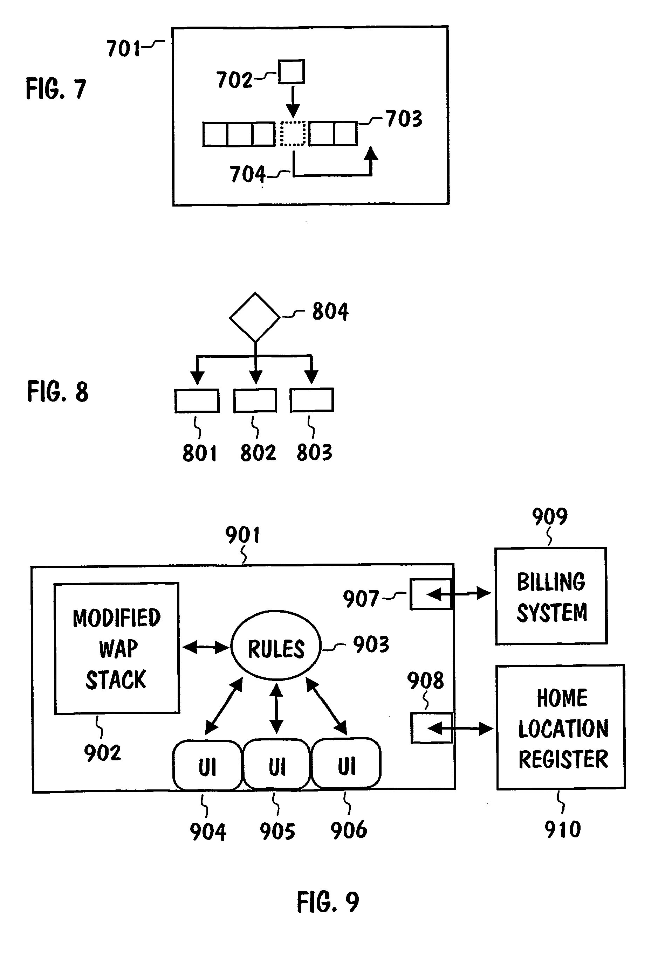

FIG. 7 shows a queue handling in a layer 701 of the modified WAP stack. The layer 701 is the WAE layer, WSP layer, WTP layer, WTLS, or the WDP layer. Let us suppose that the layer 701 receives a packet with an additional header and the additional header includes the same type of QoS level as shown in FIG. 6, and the same specification is used as mentioned above. At first, a packet 702 is placed about in the middle of a queue 703 in accordance with its QoS level attribute 602. The number of retransmission requests reaches a predetermined threshold value indicating that the network is congested. Then the queue is reordered according to the QoS level attribute 603. Let us suppose that the packet 702 has value 1 in attribute 603 and none of the packets in the queue 701 has value 1 in attribute 603. Therefore the layer 701 moves 704 the packet 702 to the head of the queue 701.

When a packet is located in the queue, the following operations can be performed for the packet.

The packet may be replaced in the queue if either the number of packet retransmission requests or the number of missing packet acknowledgements reaches a predetermined threshold value, wherein the other place is determined by the quality of service level of the packet.

The packet may be removed from the queue on grounds of the quality of service level of the packet, if either the number of packet retransmission requests or the number of missing packet acknowledgements reaches a predetermined threshold value.

The apparatus may have some fixed maximum transmission capacity and the capacity used for receiving data and sending data cannot exceed the said maximum transmission capacity. By default, the usable transmission capacity is the maximum transmission capacity. The apparatus may be adapted to calculate the usable transmission capacity by subtracting the capacity used for receiving data from the maximum transmission capacity.

The packet may be removed from the queue by taking into account the quality of service level of the packet and the usable transmission capacity. In other words, if the usable transmission capacity decreases, it may cause that the queue is made shorter by removing packets having the lowest QoS level from it.

The packet may be transmitted to another application when it is located in the head of the queue. If the apparatus has been adapted to calculate the usable transmission capacity, a packet is sent from the head of the queue when the usable transmission capacity allows the sending of the packet. Therefore the rate of sending packets may change in accordance with the usable transmission capacity.

The information transmitted with a packet contains at least one of the following pieces of information: the identifier of an application that sent the packet, user data related to the application, a model of a terminal through which the packet was sent, a source IP address, a destination IP address, a calling number, an operator prefix, a called party, a site from which the packet was sent, a time when the packet was sent, or the packet payload. There may be even more pieces of information.

There may be a lot of rules concerning packet handling. The packet handing is based on information transmitted with a packet. The QoS level is obtained as a function of the information, wherein the function is composed of rule/rules.

Rules can be organized in sets, for example, so that one rule set is used for the data packets of a browser and another rule set is used for the data packets of a real audio player. Rules may be non-configurable or configurable. Users, service providers, a network operator etc. may have their own configurable rule sets.

Rules may also be configurable through a node, for example, a gateway GPRS support node (GGSN), a serving GPRS support node (SGSN), a base station, a remote access server (RAS), or another apparatus in accordance with the invention. The said node sends a packet that is not a standard WAP packet and thus the prior art WAP stack cannot handle it. Apparatus in accordance with the invention is adapted to handle a packet sent by the special network node and configure its rules, for example, by changing its default rule set to another rule set. The apparatus is further adapted to handle a packet if the packet is encrypted and/or the packet includes a digital signature for certifying the sender of the packet. The encryption of a packet and a digital signature are intended to prevent possible misuse of the apparatus. The apparatus is further adapted to send a packet to another node, wherein the said packet is intended for configuring the rules of the other node.

Typically a rule is composed of a condition and at least two alternative operations, but a rule may contain only one operation.

FIG. 8 shows an example of a rule. In this case the rule is composed of three alternative operations 801, 802, and 803, and a condition 804. The condition is the following: if an operator prefix is 11 then perform operation 801, otherwise if the operator prefix is 22 then perform operation 802, otherwise perform operation 803. Operation 801 starts the handling of the rule set of the operator having operator prefix 11 and operation 802 starts handling of the rule set of the operator having operator prefix 22. Operation 803 is an error branch.

The following example concerns function F that results in the QoS level of a packet. The packet is transmitted with certain payload PL and source IP address IPS, and destination IP addresses IPD. Thus, the information used in the determination of the QoS level may be from the header of the packet and/or the payload of the packet. The QoS level is obtained as function F (PL, IPS, IPD, AP1, AP2..., APn), wherein AI1, Al2,...,Aln are additional pieces of information which are sometimes transmitted with a packet, but which are not transmitted at this time.

Thus, one or more arguments of a function may contain a null value. The function results in a certain QoS level when the function, i.e. its executable code, is performed with a certain set of arguments.

Apparatus in accordance with the invention includes at least the modified communication protocol stack. The apparatus may or may not include rules. If the apparatus includes rules, it may include at least one user interface through which the rules are configurable. In addition, the apparatus may include interfaces through which it can communicate with external systems such as a billing system, a subscriber database, or a positioning system.

FIG. 9 shows an example of a server apparatus 901. The server apparatus 901 includes the modified WAP stack 902, the rules 903, user interfaces 904, 905, and 906 for service users, service providers, and the administrator of the apparatus. User interfaces 904, 905, and 906 are Web- and/or WAP-based. In addition, the server apparatus includes interfaces 907 and 908 through which it is adapted to communicate with a billing system 909 and a home location register (HLR) 910.

The billing system may be able to determine the price class for a packet on grounds of the QoS level of the packet. Then the apparatus sends the QoS level to the billing system. Alternatively, the apparatus determines the price class and sends it to the billing system.

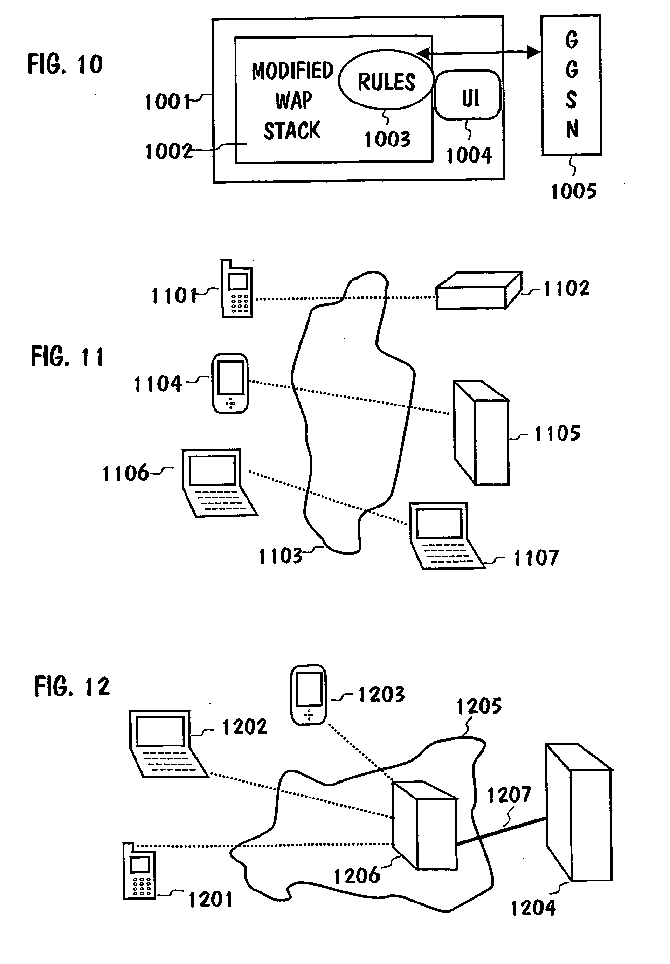

FIG. 10 shows an example of terminal apparatus 1001. The terminal apparatus 1001 includes the modified WAP stack 1002, the rules 1003 inside the said stack and user interface 1004. The user interface 1004 is a menu system in the terminal apparatus 1001. Besides the user interface 1004, the rules 1003 can be affected through a GGSN 1005. If the GGSN 1005 sends a packet indicating network load to the terminal apparatus, the terminal apparatus configures its rules to somehow adapt its operation.

When wanting to utilize the invention the modified WAP stack must to be installed in at least one device communicating with other devices. The communication may be unidirectional or bi-directional. A sending party and/or a receiving party may have the modified WAP stack.

FIG. 11 shows communicating WAP devices, each of which is an apparatus in accordance with the invention. A WAP phone 1101 transmits a text file to a WAP server 1102 via a wireless network 1103. The modified stack is installed in the WAP phone 1101 but not in the WAP server 1102. If a user of the WAP phone 1101 makes a call, the modified WAP stack continues the transmission of the text file so that the packets related to the text file have lower QoS level than the packets related to the call. In a second example, a personal digital assistant (PDA) 1104 receives an animation transmission from another server 1105. The modified stack is installed in the server 1105, but not in the PDA 1104. The server 1105 has information related to the PDA 1104 and in accordance with the said information the server 1105 decreases the numbers of frames to be sent to the PDA 1104 in the case there is lack of transmission capacity. Then the PDA 1104 continues showing the animation with a lower frames rate. In a third example, a laptop 1106 and another laptop 1107 communicate with each other. The both laptops 1106 and 1107 have the modified WAP stack and they can send and receive packets which configure the rules. Therefore the method can be used bi-directional in the communication.

Thus, the modified WAP stack can be installed in a terminal or in a WAP server with various options in the QoS implementation. In addition, or alternatively, the modified WAP stack can be installed in a WAP gateway.

The WAP gateway may be located on an HTTP server, or it is coupled to an HTTP server. The WAP gateway acts as an intermediary between a client and a service used by the client. It receives packets from the WAP stack of the client and converts them to packets that are in accordance with a WWW protocol stack. The WWW protocol stack may implement e.g. HTTP and TCP/IP. Because the WAP gateway performs the data conversions between WAP and WWW stacks, it at the same time reduces the processing needs of the client. Thus, the client can run services more efficiently. The WAP gateway can also be used as an interface to subscriber databases. Then the WAP gateway may fetch a calling number related to a packet, an operator prefix included in the said calling number, and/or a called number related to the packet, and use those pieces of information when determining the QoS level of the packet.

FIG. 12 shows apparatus that is composed of a proxy server and the WAP gateway so that the proxy server and the WAP gateway are connected by a communication link. A WAP phone 1201, a laptop 1202, and a PDA 1203 communicate with the HTTP server 1204 via a wireless network 1205 and the apparatus 1206. The WAP 1201 phone has the highest QoS level, in all the QoS attributes, compared to the QoS levels of the laptop 1202 and the PDA 1203. Thus, the WAP phone 1201 has in all cases equal or better transmission capacity on link 1207 than the laptop 1202 and the PDA 1203. Communication link 1207 is the only link through which WAP devices can communicate with the HTTP server 1204. Therefore the apparatus 1206 can be used to prioritize the service requests of the WAP devices.

Besides the above examples of modified WAP stacks and apparatus using a modified WAP stack there are many other possibilities to utilize the invention. The invention can be particularly utilized in apparatus that is connected to a network with communication link/links allocated for the apparatus. Then the apparatus can best control how the transmission capacity of the communication link/links is used between applications/users.

## Claims

1. A method for implementing quality of service in data transmissions of a communication network,
**characterized by** the steps of:
receiving in a node of the communication network on one layer (301, 401, 501) of a communication protocol stack a packet sent by an application, the communication protocol stack implementing a certain communication protocol set used in the communication network,
determining in the communication protocol stack a quality of service level of the packet as a function of information transmitted with said packet, the function being composed of a rule/rules (308, 408, 506) which are configurable from outside of the communication protocol stack and, in accordance with the determined quality of service level,
performing in the communication protocol stack one of the following quality of service operations: transmitting the packet to another application via the communication network, removing of the packet, or placing the packet (307, 407, 503) with the quality of service level in a queue (306, 406, 507), wherein at least handling of the queue is placed in the communication protocol stack.

2. The method as described in claim 1, **characterized by** the further step of:
replacing the packet in the queue in another position when either the number of packet retransmission requests or the number of missing packet acknowledgements reaches a predetermined threshold value, wherein the other position in the queue is determined by the quality of service level of the packet.

3. The method as described in claim 1, **characterized by** the further step of:
removing the packet from the queue on grounds of the quality of service level of the packet when either the number of packet retransmission requests or the number of missing packet acknowledgements reaches a predefined threshold.

4. The method as described in claim 1, **characterized by** the further step of:
calculating usable transmission capacity by taking into account maximum transmission capacity of the node of the communication network and the number of bytes currently used to receive data at said node and, on ground of the quality of service level of the packet and the usable transmission capacity
performing a certain operation directed to the packet.

5. The method as described in claim 1, **characterized in that** the quality of service level is composed of at least two attributes of which one determines the position of the packet in the queue when either the number of packet retransmission requests or the number of missing packet acknowledgements reaches a predetermined threshold.

6. The method as described in claim 1, **characterized in that** the information transmitted with a packet contains at least one of the following pieces of information: an identifier of the application, user data related to the application, a model of a terminal through which the packet was sent, an Internet peripheral address, a calling number, an operator prefix, a called party, a site from which the packet was sent, or a time when the packet was sent.

7. The method as described in claim 1, **characterized in that** the rule/rules are configurable by at least one of the following parties: a user of the application, a receiver of the packet, a service provider of the communication network, or an administrator administrating the use of the method.

8. The method as described in claim 1, **characterized by** the further step of:
receiving at said node a packet sent from another node of the communication network, said packet being intended for configuring the rule/rules.

9. The method as described in claim 1, **characterized by** the further step of:
sending a packet from said node to another node of the communication network, said packet being intended for configuring the rule/rules of the other node.

10. The method as described in claim 1, **characterized in that** the method is implemented in one layer of the communication protocol stack.

11. The method as described in claim 1, **characterized in that** the method is implemented in at least two layers of the communication protocol stack.

12. The method as described in claim 11, **characterized in that** the communication between said layers is based on an additional header which is transmitted with the packet from one layer to another, the additional header including the quality of service level of the packet.

13. The method as described in claim 11, **characterized in that** the communication between said layers is performed as follows:
receiving the packet on a layer of the communication protocol stack,
sending a quality of service level request from said layer to an upper layer of the communication protocol stack, the quality of service level request including information about the packet received, and
returning from said upper level of the communication protocol stack the quality of service level of the packet as a response to the quality of service level request.

14. The method as described in claim 1, **characterized in that** the communication protocol stack is a WAP stack.

15. An apparatus for implementing quality of service in data transmissions of a communication network,
**characterized in that** the apparatus includes a communication protocol stack, which implements a certain communication protocol set used in the communication network, and the apparatus is adapted to
receive in a node of the communication network on one layer (301, 401, 501) of the communication protocol stack a packet sent by an application,
determine in the communication protocol stack a quality of service level of the packet as a function of information transmitted with said packet, the function being composed of a rule/rules (308, 408, 506) which are configurable from outside of the communication protocol stack, and in accordance with the determined quality of service level,
perform in the communication protocol stack one of the following quality of service operations: transmitting the packet to another application via the communication network, removing of the packet, or placing the packet (307, 407, 503) with the quality of service level in a queue (306, 406, 507), wherein at least handling of the queue is placed in the communication protocol stack.

16. The apparatus as described in claim 15, **characterized in that** the apparatus is further adapted to replace the packet in the queue in another position when either the number of packet retransmission requests or the number of missing packet acknowledgements reaches a predetermined threshold value, wherein the other position is determined by the quality of service level of the packet.

17. The apparatus as described in claim 15, **characterized in that** the apparatus is further adapted to remove the packet from the queue on grounds of the quality of service level of the packet when either the number of packet retransmission requests or the number of missing packet acknowledgements reaches a predetermined threshold value.

18. The apparatus as described in claim 15, **characterized in that** the apparatus is further adapted to
calculate usable transmission capacity by taking into account maximum transmission capacity of the apparatus and the number of bytes currently used to receive data and, on ground of the quality of service level of the packet and the usable transmission capacity
perform a certain operation directed to the packet.

19. The apparatus as described in claim 15, **characterized in that** the quality of service level is composed of at least two attributes, of which one determines the position of the packet in the queue when either the number of packet retransmission requests or the number of missing packet acknowledgements reaches a predetermined threshold.

20. The apparatus as described in claim 15, **characterized in that** the information transmitted with a packet contains at least one of the following pieces of information: an identifier of the application, user data related to the application, a model of a terminal through which the packet was sent, an Internet peripheral address, a calling number, an operator prefix, a called party, a site from which the packet was sent, or a time when the packet was sent.

21. The apparatus as described in claim 15, **characterized in that** the rule/rules are configurable by at least one of the following parties: a user of the application, a receiver of the packet, a service provider of the communication network, or an administrator of the apparatus, and the apparatus is further adapted to provide at least one user interface for said parties.

22. The apparatus as described in claim 15, **characterized in that** the apparatus is further adapted to
receive at said node a packet sent by another node of the communication network and
configure the rule/rules in accordance with the content of said packet.

23. The apparatus as described in claim 15, **characterized in that** the apparatus is further adapted to
send a packet from said node to another node of the communication network, said packet being intended for configuring the rule/rules of the other node.

24. The apparatus as described in claim 15, **characterized in that** the modified communication protocol stack is a WAP stack.

25. The apparatus as described in claim 15, **characterized in that** the apparatus is a terminal.

26. The apparatus as described in claim 15, **characterized in that** the apparatus is a server.

27. The apparatus as described in claim 15, **characterized in that** the apparatus includes at least one of the following devices/software: a WAP gateway, a proxy server, or a HTTP server.

28. The apparatus as described in claim 15, **characterized in that** the apparatus is further adapted to communicate with at least one the following external systems: a billing system, a subscriber database, or a positioning system.

## Patentansprüche

1. Verfahren zur Umsetzung von Servicequalität bei der Datenübertragung eines Kommunikationsnetzwerks,
**gekennzeichnet durch** folgende Schritte:
Empfang von einem Knoten eines Kommunikationsnetzwerks auf einer Ebene (301, 401, 501) eines Kommunikationsprotokollstapels, einem Paket, das bei einer Anwendung gesendet wird, der Kommunikationsprotokollstapel implementiert ein gewisses Kommunikationsprotokoll-Set, das in dem Kommunikationsnetzwerk verwendet wird,
bestimmt in dem Kommunikationsprotokollstapel ein Servicequalitätsniveau des Pakets als eine Funktion der Informationsübertragung mit besagtem Paket, die Funktion setzt sich aus einer Regel/Regeln (308, 408, 506) zusammen, die von außerhalb des Kommunikationsprotokollstapels konfigurierbar sind und mit dem festgelegten Servicequalitätsniveau übereinstimmen,
und in dem Kommunikationsprotokollstapel einen der folgenden Vorgänge der Servicequalität durchführen: Übertragen des Pakets auf eine andere Anwendung über das Kommunikationsnetzwerk, Entfernen des Pakets oder Ablegen des Paktes (307, 407, 503) mit dem Servicequalitätsniveau in einer Warteschlange (306, 406, 507) in der mindestens die Handhabung der Warteschlange im Kommunikationsprotokollstapel abgelegt ist.

2. Verfahren nach Anspruch 1, **dadurch gekennzeichnet, dass**:
das Paket in der Warteschlange in eine andere Position gewechselt wird, entweder wenn die Anzahl erneuter Paketübertragungsanforderungen oder die Anzahl fehlender Paketempfangsbestätigungen einen festgelegten Schwellenwert erreichen, bei dem die andere Position in der Warteschlange durch das Servicequalitätsniveau des Pakets festgelegt ist.

3. Verfahren nach Anspruch 1, **dadurch gekennzeichnet, dass**
das Paket aus der Warteschlange aufgrund des Servicequalitätsniveaus des Pakets entfernt wird, wenn entweder die Anzahl erneuter Paketübertragungsanforderungen oder die Anzahl der fehlenden Paketempfangsbestätigungen eine vordefinierte Schwelle erreicht.

4. Verfahren nach Anspruch 1, **dadurch gekennzeichnet, dass**
die verwendbare Übertragungskapazität unter Einbeziehung der maximalen Übertragungskapazität des Knotens des Kommunikationsnetzwerks und der Anzahl der Bytes berechnet wird, die derzeit verwendet werden, um Daten bei dem besagten Knoten zu empfangen, und aufgrund des Servicequalitätsniveaus des Pakets und der verwendbaren Übertragungskapazität,
ein gewisser Vorgang, der auf das Paket gerichtet ist, durchgeführt wird.

5. Verfahren nach Anspruch 1, **dadurch gekennzeichnet, dass** sich das Servicequalitätsniveau mindestens aus zwei Attributen zusammensetzt, von denen eines die Position des Pakets in der Warteschlange bestimmt, wenn entweder die Anzahl der erneuten Paketübertragungsanforderungen oder die Anzahl der fehlenden Paketempfangsbestätigungen eine vordefinierte Schwelle erreicht.

6. Verfahren nach Anspruch 1, **dadurch gekennzeichnet, dass** die Information, die mit einem Paket übertragen wird, mindestens eine der folgenden Informationen enthält: Einen Bezeichner der Anwendung, Benutzerdaten bezogen auf die Anwendung, ein Modell eines Terminals, durch den das Paket gesendet wurde, eine Peripherieadresse im Internet, eine Rufnummer, ein Operator-Präfix, eine angerufene Person, eine Internetseite, von der das Paket gesendet wurde, oder eine Zeit, zu der das Paket gesendet wurde.

7. Verfahren nach Anspruch 1, **dadurch gekennzeichnet, dass** die Regel/Regeln von mindestens einer der folgenden Parteien konfigurierbar sind: Ein Benutzer der Anwendung, ein Empfänger des Pakets, ein Dienstanbieter des Kommunikationsnetzwerks oder ein Administrator, der die Nutzung der Methode verwaltet.

8. Verfahren nach Anspruch 1, **dadurch gekennzeichnet, dass**:
ein Paket bei besagtem Knoten empfängt wird, das von einem anderen Knoten des Kommunikationsnetzwerks gesendet wurde, wobei besagtes Paket zur Konfiguration der Regel/Regeln bestimmt ist.

9. Verfahren nach Anspruch 1, **dadurch gekennzeichnet, dass**:
ein Paket von besagtem Knoten an einen anderen Knoten des Kommunikationsnetzwerks gesandt wird, wobei besagtes Paket zur Konfiguration der Regel/Regeln des anderen Knotens bestimmt ist.

10. Verfahren nach Anspruch 1, **dadurch gekennzeichnet, dass** das Verfahren in einer Ebene des Kommunikationsprotokollstapels implementiert ist.

11. Verfahren nach Anspruch 1, **dadurch gekennzeichnet, dass** das Verfahren mindestens in zwei Ebenen des Kommunikationsprotokollstapels implementiert ist.

12. Verfahren nach Anspruch 11, **dadurch gekennzeichnet, dass** die Kommunikation zwischen besagten Ebenen auf der zusätzlichen Kopfzeile basiert, die mit dem Paket von einer Ebene zu einer anderen übertragen wird, wobei die zusätzliche Kopfzeile das Servicequalitätsniveau des Pakets einschließt.

13. Verfahren nach Anspruch 11, **dadurch gekennzeichnet, dass** die Kommunikation zwischen besagten Ebenen wie folgt durchgeführt wird:
Empfangen des Pakets auf einer Ebene des Kommunikationsprotokollstapels,
senden einer Servicequalitätsniveauanforderung von besagter Ebene an eine obere Ebene des Kommunikationsprotokollstapels, das Servicequalitätsniveau schließt die Information über das erhaltene Paket mit ein, und
Rückgabe des Servicequalitätsniveaus des Pakets von besagter oberen Ebene des Kommunikationsprotokollstapels, als eine Antwort auf die Servicequalitätsniveauanforderung.

14. Verfahren nach Anspruch 1, **dadurch gekennzeichnet, dass** der Kommunikationsprotokollstapel ein WAP-Stapel ist.

15. Apparat zur Umsetzung von Servicequalität bei der Datenübertragung eines Kommunikationsnetzwerks, **dadurch gekennzeichnet, dass**
der Apparat einen Kommunikationsprotokollstapel enthält, der ein bestimmtes Kommunikationsprotokoll-Set implementiert, das in dem Kommunikationsnetzwerk verwendet wird,
und der Apparat angepasst ist, um
in einem Knoten des Kommunikationsnetzwerks auf einer Ebene (301, 401, 501) des Kommunikationsprotokollstapels ein Paket zu empfangen, dass von einer Anwendung gesendet wird,
in dem Kommunikationsprotokollstapel ein Servicequalitätsniveau des Pakets als eine Funktion der Information, übertragen mit besagtem Paket, zu bestimmen, die Funktion setzt sich aus einer Regel/Regeln (308, 408, 506) zusammen, die von außerhalb des Kommunikationsprotokollstapels konfigurierbar sind und mit dem festgelegten Servicequalitätsniveau übereinstimmen,
und in dem Kommunikationsprotokollstapel einen der folgenden Vorgänge der Servicequalität durchführen: Übertragen des Pakets auf eine andere Anwendung über das Kommunikationsnetzwerk, Entfernen des Pakets oder Ablegen des Paktes (307, 407, 503) mit dem Servicequalitätsniveau in einer Warteschlange (306, 406, 507) in der mindestens die Handhabung der Warteschlange im Kommunikationsprotokollstapel abgelegt ist.

16. Apparat nach Anspruch 15, **dadurch gekennzeichnet, dass** der Apparat zusätzlich angepasst ist, das Paket in der Warteschlange in einer anderen Position zu ersetzen, entweder wenn die Anzahl erneuter Paketübertragungsanforderungen oder die Anzahl fehlender Paketempfangsbestätigungen einen festgelegten Schwellenwert erreichen, bei dem die andere Position in der Warteschlange durch das Servicequalitätsniveau des Pakets festgelegt ist.

17. Apparat nach Anspruch 15, **dadurch gekennzeichnet, dass**, dass der Apparat weiter angepasst ist, um das Paket, aufgrund des Servicequalitätsniveaus des Pakets, aus der Warteschlange zu entfernen, wenn entweder die Anzahl erneuter Paketübertragungsanforderungen oder die Anzahl fehlender Paketempfangsbestätigungen einen festgelegten Schwellenwert erreichen.

18. Apparat nach Anspruch 15, **dadurch gekennzeichnet, dass** der Apparat weiter angepasst ist, um
verwendbare Übertragungskapazität unter Einbeziehung der maximalen Übertragungskapazität des Apparats und der Anzahl der Bytes, die derzeit verwendet werden, um Daten zu empfangen, zu berechnen und aufgrund des Servicequalitätsniveaus des Pakets und der verwendbaren Übertragungskapazität,
einen gewissen Vorgang, der auf das Paket gerichtet ist, durchzuführen.

19. Apparat nach Anspruch 15, **dadurch gekennzeichnet, dass** sich das Servicequalitätsniveau mindestens aus zwei Attributen zusammensetzt, von denen eines die Position des Pakets in der Warteschlange bestimmt, wenn entweder die Anzahl der erneuten Paketübertragungsanforderungen oder die Anzahl der fehlenden Paketempfangsbestätigungen eine vordefinierte Schwelle erreicht.

20. Apparat nach Anspruch 15, **dadurch gekennzeichnet, dass** die Information, die mit einem Paket übertragen wird, mindestens eine der folgenden Informationen enthält: Einen Bezeichner der Anwendung, Benutzerdaten bezogen auf die Anwendung, ein Modell eines Terminals durch den das Paket gesendet wurde, eine Peripherieadresse im Internet, eine Rufnummer, ein Operator-Präfix, eine angerufene Person, eine Internetseite, von der das Paket gesendet wurde, oder eine Zeit, zu der das Paket gesendet wurde.

21. Apparat nach Anspruch 15, **dadurch gekennzeichnet, dass** die Regel/Regeln von mindestens einer der folgenden Parteien konfigurierbar sind: Ein Benutzer der Anwendung, ein Empfänger eines Pakets, ein Dienstanbieter des Kommunikationsnetzwerks oder ein Administrator des Apparats, und der Apparat ist überdies so angepasst, dass er besagten Parteien mindestens eine Benutzerschnittstelle bietet.

22. Apparat nach Anspruch 15, **dadurch gekennzeichnet, dass** der Apparat weiter angepasst ist, um
bei besagtem Knoten ein Paket zu empfangen, das von einem anderen Knoten des Kommunikationsnetzwerks gesendet wurde und
die Regel/Regeln in Übereinstimmung mit dem Inhalt des besagten Pakets zu konfigurieren.

23. Apparat nach Anspruch 15, **dadurch gekennzeichnet, dass** der Apparat weiter angepasst ist, um
ein Paket von besagtem Knoten an einen anderen Knoten des Kommunikationsnetzwerks zu senden, wobei besagtes Paket zur Konfiguration der Regel/Regeln des anderen Knotens bestimmt ist.

24. Apparat nach Anspruch 15, **dadurch gekennzeichnet, dass** der modifizierte Kommunikationsprotokollstapel ein WAP-Stapel ist.

25. Apparat nach Anspruch 15, **dadurch gekennzeichnet, dass** der Apparat ein Terminal ist.

26. Apparat nach Anspruch 15, **dadurch gekennzeichnet, dass** der Apparat ein Server ist.

27. Apparat nach Anspruch 15, **dadurch gekennzeichnet, dass** der Apparat mindestens folgende Geräte/Software enthält: Ein WAP Gateway, einen Proxyserver oder einen HTTP-Server.

28. Apparat nach Anspruch 15, **dadurch gekennzeichnet, dass** der Apparat weiter angepasst ist, um mindestens mit einem der folgenden externen Systeme zu kommunizieren: Einem Abrechnungssystem, einer Abonnentendatenbank oder einem Positioniersystem.

## Revendications

1. Une méthode pour mettre en oeuvre la qualité de service dans les transmissions de données d'un réseau de communication,
**caractérisée par** les étapes suivantes :
réception, dans un noeud du réseau de communication sur une couche (301, 401, 501) d'une pile de protocoles de communication, d'un paquet envoyé par une application, la pile de protocoles de communication exécutant une certaine série de protocoles de communication utilisée dans le réseau de communication,
détermination, dans la pile de protocoles de communication, d'une qualité de niveau de service du paquet en fonction des informations transmises avec ledit paquet, la fonction étant composée d'une règle / de règles (308, 408, 506) qui sont paramétrables depuis l'extérieur de la pile de protocoles de communication et conformément à la qualité déterminée du niveau de service,
exécution, dans la pile de protocoles de communication, d'une des opérations de qualité de service suivantes : transmission du paquet à une autre application via le réseau de communication, retrait du paquet, ou placement du paquet (307, 407, 503) avec la qualité du niveau de service dans une file (306, 406, 507), où au moins le traitement de la file est placé dans la pile de protocoles de communication.

2. La méthode comme décrite dans la revendication 1, **caractérisée par** l'étape supplémentaire suivante :
remplacement du paquet dans la file dans une autre position quand soit le nombre de demandes de retransmissions de paquets, soit le nombre de reconnaissances de paquets manquants atteint une valeur seuil déterminée à l'avance, où l'autre position dans la file est déterminée par la qualité du niveau de service du paquet.

3. La méthode comme décrite dans la revendication 1, **caractérisée par** l'étape supplémentaire suivante :
retrait du paquet de la file en raison de la qualité du niveau de service du paquet quand soit le nombre de demandes de retransmissions de paquets, soit le nombre de reconnaissances de paquets manquants atteint un seuil prédéfini.

4. La méthode comme décrite dans la revendication 1, **caractérisée par** l'étape supplémentaire suivante :
calcul de la capacité de transmission utilisable en prenant en compte la capacité de transmission maximale du noeud du réseau de communication et le nombre d'octets actuellement habitués à recevoir des données audit noeud et, en raison de la qualité du niveau de service du paquet et de la capacité de transmission utilisable
exécution d'une certaine opération dirigée au paquet.

5. La méthode comme décrite dans la revendication 1, **caractérisée par le fait que** la qualité du niveau de service est composée d'au moins deux attributs, dont l'un détermine la position du paquet dans la file où soit le nombre de demandes de retransmissions de paquets, soit le nombre de reconnaissances de paquets manquants atteint un seuil déterminé à l'avance.

6. La méthode comme décrite dans la revendication 1, **caractérisée par le fait que** les informations transmises avec un paquet contiennent au moins un des morceaux d'informations suivants : un identificateur de l'application, des données utilisateur liées à l'application, un modèle d'un terminal par lequel le paquet a été envoyé, une adresse périphérique Internet, un numéro d'appel, un préfixe d'opérateur, une partie appelée, un site duquel le paquet a été envoyé ou bien une heure à laquelle le paquet a été envoyé.

7. La méthode comme décrite dans la revendication 1, **caractérisée par le fait que** la règle / les règles sont paramétrables par au moins l'une des parties suivantes : un utilisateur de l'application, un récepteur du paquet, un fournisseur de services du réseau de communication ou un administrateur qui administre l'usage de la méthode.

8. La méthode comme décrite dans la revendication 1, **caractérisée par** l'étape supplémentaire suivante :
réception audit noeud d'un paquet envoyé depuis un autre noeud du réseau de communication, ledit paquet étant prévu pour configurer la règle / les règles.

9. La méthode comme décrite dans la revendication 1, **caractérisée par** l'étape supplémentaire suivante :
envoi d'un paquet depuis ledit noeud vers un autre noeud du réseau de communication, ledit paquet étant prévu pour configurer la règle / les règles de l'autre noeud.

10. La méthode comme décrite dans la revendication 1, **caractérisée par le fait que** la méthode est exécutée dans une couche de la pile de protocoles de communication.

11. La méthode comme décrite dans la revendication 1, **caractérisée par le fait que** la méthode est exécutée dans au moins deux couches de la pile de protocoles de communication.

12. La méthode comme décrite dans la revendication 11, **caractérisée par le fait que** la communication entre lesdites couches est fondée sur un entête supplémentaire qui est transmis avec le paquet d'une couche à une autre, l'en-tête supplémentaire incluant la qualité du niveau de service du paquet.

13. La méthode comme décrite dans la revendication 11, **caractérisée par le fait que** la communication entre lesdites couches est exécutée comme suit :
réception du paquet sur une couche de la pile de protocoles de communication,
envoi d'une demande de qualité du niveau de service de ladite couche à une couche supérieure de la pile de protocoles de communication, la demande de qualité du niveau de service incluant des informations au sujet du paquet reçu, et
renvoi, dudit niveau supérieur de la pile de protocoles de communication, de la qualité du niveau de service du paquet comme une réponse à la demande de qualité du niveau de service.

14. La méthode comme décrite dans la revendication 1, **caractérisée par le fait que** la pile de protocoles de communication est une pile WAP.

15. Un équipement pour exécuter la qualité de service dans les transmissions de données d'un réseau de communication,
**caractérisé par le fait que** l'équipement inclut une pile de protocoles de communication, qui exécute une certaine série de protocoles de communication utilisée dans le réseau de communication et l'équipement est adapté à
recevoir dans un noeud du réseau de communication sur une couche (301, 401, 501) de la pile de protocoles de communication un paquet envoyé par une application,
déterminer, dans la pile de protocoles de communication, une qualité de niveau de service du paquet comme une fonction des informations transmises avec ledit paquet, la fonction étant composée d'une règle / de règles (308, 408, 506) qui sont paramétrables depuis l'extérieur de la pile de protocoles de communication et conformément à la qualité déterminée du niveau de service,
exécuter, dans la pile de protocoles de communication, une des opérations de qualité de service suivantes : transmission du paquet à une autre application via le réseau de communication, retrait du paquet, ou placement du paquet (307, 407, 503) avec la qualité du niveau de service dans une file (306, 406, 507), où au moins le traitement de la file est placé dans la pile de protocoles de communication.

16. L'équipement comme décrit dans la revendication 15, **caractérisé par le fait que** l'équipement est davantage adapté pour replacer le paquet dans la file dans une autre position quand soit le nombre de demandes de retransmissions de paquets, soit le nombre de reconnaissances de paquets manquants atteint une valeur seuil déterminée à l'avance, où l'autre position dans la file est déterminée par la qualité du niveau de service du paquet.

17. L'équipement comme décrit dans la revendication 15, **caractérisé par le fait que** l'équipement est davantage adapté pour retirer le paquet de la file en raison de la qualité du niveau de service du paquet où soit le nombre de demandes de retransmissions de paquets, soit le nombre de reconnaissances de paquets manquants atteint un seuil déterminé à l'avance.

18. L'équipement comme décrit dans la revendication 15, **caractérisé par le fait que** l'équipement est davantage adapté à
calculer la capacité de transmission utilisable en prenant en compte la capacité de transmission maximale de l'équipement et le nombre d'octets actuellement habitués à recevoir des données et, en raison de la qualité du niveau de service du paquet et de la capacité de transmission utilisable
exécuter une certaine opération dirigée au paquet.

19. L'équipement comme décrit dans la revendication 15, **caractérisé par le fait que** la qualité du niveau de service est composée d'au moins deux attributs, dont l'un détermine la position du paquet dans la file où soit le nombre de demandes de retransmissions de paquets, soit le nombre de reconnaissances de paquets manquants atteint un seuil déterminé à l'avance.

20. L'équipement comme décrit dans la revendication 15, **caractérisé par le fait que** les informations transmises avec un paquet contiennent au moins un des morceaux d'informations suivants : un identificateur de l'application, des données utilisateur liées à l'application, un modèle d'un terminal par lequel le paquet a été envoyé, une adresse périphérique Internet, un numéro d'appel, un préfixe d'opérateur, une partie appelée, un site duquel le paquet a été envoyé ou bien une heure à laquelle le paquet a été envoyé.

21. L'équipement comme décrit dans la revendication 15, **caractérisé par le fait que** la règle / les règles sont paramétrables par au moins l'une des parties suivantes : un utilisateur de l'application, un récepteur du paquet, un fournisseur de services du réseau de communication ou un administrateur de l'équipement, et l'équipement est davantage adapté à fournir au moins une interface utilisateur pour lesdites parties.

22. L'équipement comme décrit dans la revendication 15, **caractérisé par le fait que** l'équipement est davantage adapté pour
recevoir audit noeud un paquet envoyé par un autre noeud du réseau de communication et
configurer la règle /les règles conformément au contenu dudit paquet.

23. L'équipement comme décrit dans la revendication 15, **caractérisé par le fait que** l'équipement est davantage adapté pour
envoyer un paquet depuis ledit noeud vers un autre noeud du réseau de communication, ledit paquet étant prévu pour configurer la règle / les règles de l'autre noeud.

24. L'équipement comme décrit dans la revendication 15, **caractérisé par le fait que** la pile de protocoles de communication modifiée est une pile WAP.

25. L'équipement comme décrit dans la revendication 15, **caractérisé par le fait que** l'équipement est un terminal.

26. L'équipement comme décrit dans la revendication 15, **caractérisé par le fait que** l'équipement est un serveur.

27. L'équipement comme décrit dans la revendication 15, **caractérisé par le fait que** l'équipement inclut au moins un des appareils / logiciels suivants : une passerelle WAP, un serveur proxy ou un serveur HTTP.

28. L'équipement comme décrit dans la revendication 15, **caractérisé par le fait que** l'équipement est davantage adapté pour communiquer avec au moins un des systèmes externes suivants : un système de facturation, une base de données d'abonnés ou un système de positionnement.
